(19) Europäisches Patentamt
European Patent Office
Office européen des brevets

(11) Publication number: **0 177 206 B1**

(12) # EUROPEAN PATENT SPECIFICATION

(45) Date of publication of the patent specification: **01.03.89**

(51) Int. Cl.[4]: **C 03 C 25/02**, C 03 B 37/018, G 02 B 6/44

(21) Application number: **85306478.0**

(22) Date of filing: **12.09.85**

(54) **Optical fibres.**

(30) Priority: **29.09.84 GB 8424641**

(43) Date of publication of application: **09.04.86 Bulletin 86/15**

(45) Publication of the grant of the patent: **01.03.89 Bulletin 89/9**

(84) Designated Contracting States: **AT BE CH DE FR IT LI LU NL SE**

(56) References cited:
**GB-A-1 592 234**
**GB-A-2 062 615**
**US-A-4 118 211**

(73) Proprietor: **STANDARD TELEPHONES AND CABLES PUBLIC LIMITED COMPANY, 190 Strand, London, WC2R 1DU (GB)**

(72) Inventor: **Newbould, Richard Thomas, 198 Parsonage Leys, Harlow Essex CM20 3PN (GB)**
Inventor: **Piggs, Susan Jane, 20 Hockerill Court London Road, Bishops Stortford Hertfordshire (GB)**
Inventor: **Wilson, Stephen John, 9 St. Peter's Street, Duxford Cambridge (GB)**

(74) Representative: **Capsey, Sydney Ross, Standard Telephones and Cables Patent Department Edinburgh Way, Harlow Essex CM20 2SH (GB)**

**EP 0 177 206 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

## Description

This invention relates to optical fibres and, in particular, to the manufacture of optical fibres.

Optical fibres with a thin surface layer of silicon nitride or silicon oxynitride are known to show significant improvements in static fatigue performance as stress corrosion due to water attack is retarded. More recently, such surface layers have been found to be very effective barriers to the diffusion of free hydrogen into optical fibres. The thickness of the coatings required is of the order of 200A (20 nm). The methods of production of such known silicon nitride or silicon oxynitride layers on optical fibres may involve chemical vapor phase (CVD) techniques, as discussed in US-A-4 118 211 which also refers to the possibility of using other coating techniques, such as vacuum vapor desposition, sputtering, ion-beam and arc plasma, in lieu of the chemical vapor deposition method. GB-A-1 592 234 also describes applying a layer of a water imprevious compound, such as silicon nitride, to the outer surface of a doped silica cladding of an optical fibre. Specifically the silicon nitride deposition is by means of RF plasma discharge, although other methods of applying a silicon nitride coating on the silica surface are referred to, such as vacuum evaporation as well as the use of glow discharge.

According to one aspect of the present invention there is provided a method of manufacturing silica optical fibre protected at least partially from water attack characterised by the steps of taking a silica preform or a silica fibre, which preform or fibre is unprotected from water attack and has a surface layer containing oxygen, and directly nitriding the surface layer, which nitriding step comprises chemically changing part of the surface layer by substituting at least part of the oxygen therein with nitrogen to produce a silicon oxynitride based surface providing water attack protection.

According to another aspect of the present invention there is provided a method of manufacturing silica optical fibre protected at least partially from water attack including the step of taking a silica preform which is unprotected from water attack and has a surface layer containing oxygen, characterised by the step of directly nitriding the surface layer, which nitriding step comprises chemically changing part of the surface layer to silicon nitride or silicon oxynitride providing water attack protection by substituting at least part of the oxygen therein with nitrogen while drawing fibre from the preform in a drawing furnace in which a reducing and nitriding atmosphere is present.

Embodiments of the present invention will now be described with reference to the accompanying drawings, in which:

Fig. 1 shows schematically a furnace arrangement for the direct nitridation of the surface of optical fibres, and

Fig. 2 shows schematically the production of a preform for optical fibres with a compressive cladding.

The basic method proposed by the present invention, involves direct nitridation of the silicate surface of an optical fibre preform (or a fibre) to a silicon oxynitride based surface, rather than the CVD or other techniques referred to above, all of which involve the deposition of a coating layer on the silica surface. In the present invention the glass is converted in the presence of a reducing and nitriding atmosphere at high temperature (900 °C). Direct nitridation, in order to produce silicon oxynitride or silicon nitride, is a surface modification technique. That is the existing silica surface is chemically changed, as opposed to the CVD or other known methods which deposit further material onto a surface.

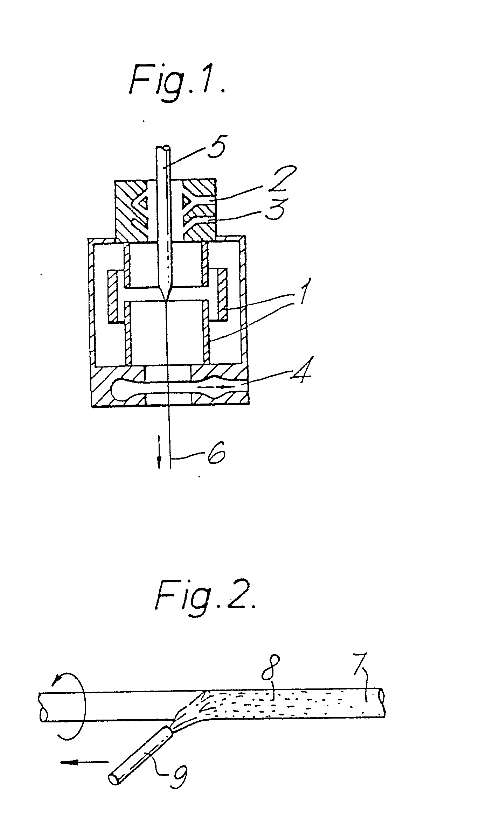

Fig. 1 illustrates schematically a furnace arrangement for the direct nitridation of optical fibre surfaces. The furnace illustrated is of the carbon resistance type with carbon hearths and element 1 and has a top gas injection means including a port 2 for the introduction of a furnace purge gas and a port 3 for the introduction of a chosen recipe of reactive gases (nitriding atmosphere) into the furnace atmosphere. All gases exiting the furnace are extracted using a radial port 4. A silica based optical fibre preform 5 is, in use of the furnace, drawn into fibre 6 in the conventional manner. Typically the reactive gas may comprise ammonia. The silica based fibre 6 drawn using the furnace has its surface impregnated with nitrogen. That is, the glass surface has amounts of oxygen substituted by nitrogen in the form of oxynitrides.

Compressive claddings comprising titania doped silica have previously been applied to silica fibres in order to yield fibres with elevated tensile strength, static fatigue due to water attack is not overcome thereby. Such titania doped silica claddings may be applied to silica glass preforms, which are subsequently drawn down to fibres. When $SiCl_4$ and $TiCl_4$ are heated in an oxy/hydrogen flame, a $SiO_2/TiO_2$ soot results. The size and $SiO_2:TiO_2$ ratio of the soot can be controlled by controlling the various gas flow-rates passing through the oxy/hydrogen torch.

A glass preform 7 (Fig. 2) can be coated with the $SiO_2/TiO_2$ soot 8 by rotating it across the flame of the oxy/hydrogen torch 9 and traversing the torch along the length of the preform. The fragile soot adheres loosely to the glass preform when first deposited and may be immediately sintered into compact glass under the action of a heat source, which may be the deposition torch itself. Alternatively, the soot can be sintered during drawing into fibre in the drawing furnace.

$TiO_2$ in solution with $SiO_2$ in low concentrations ($TiO_2$ 10% wt) is a low, or negative, expansion glass. When, for example, a 125 µm silica glass fibre has a thin (~ 5 µm) layer of this glass over its surface, the "silica bulk" of the fibre draws the $TiO_2/SiO_2$ surface into compression, yielding, as mentioned above, a fibre with elevated tensile strength but still subject to water attack. The water attack problem can be eliminated by producing a very thin layer (200A) (20 nm) of silicon oxynitride or silicon nitride.

Typically the gas flows to the oxyhydrogen torch may be as follows: $TiCl_4$ 198 cc $min^{-1}$; $SiCl_4$ 185 cc $min^{-1}$; $H_2$ 4 to 20 litres $min^{-1}$, and $O_2$ 2 to 10 litres $min^{-1}$ (the actual $O_2$ and $H_2$ values depend on the level of sinter required). The glass obtained is $SiO_2$/3% $TiO_2$. The torch is specially designed in order to burn a predetermined ratio of titanium and silicon tetrachloride vapours in an oxy/hydrogen flame to produce the aforementioned soot. The torch provides the reactants and heat for the reactions.

$$2H_2 + O_2 + TiCl_4 = TiO_2 + 4HCl$$
$$2H_2 + O_2 + SiCl_3 = SiO_2 + 4HCl$$

The torch also burns to produce heat which wholly or partially sinters the $TiO_2/SiO_2$ soot onto the surface of the silica preform.

Ammonia is able to substitute nitrogen for oxygen in $SiO_2$ or $TiO_2$, so silicon oxynitride or nitride may be produced by direct nitridation of a titanium doped silica compressive coating, in which case the soot applied to the preform may be only partially sintered prior to direct nitridation and drawing in a furnace as described above with respect to Fig. 1, for example. The ratio of coating thickness must be carefully chosen to effect the maximum compressive stress in the surface of the optical fibre. A compressive stress can result in the surface of an optical fibre (silica based) because silica containing traces of titania can exhibit significantly lower thermal expansion coefficients than silica glass. The glass containing titania can also exhibit a slightly high glass transition temperature. Therefore, as an optical fibre is drawn from its preform and freezes in, the bulk of the fibre will contract and compress the low contraction surface.

**Claims**

1. A method of manufacturing silica optical fibre protected at least partially from water attack characterised by the steps of taking a silica preform (5) or a silica fibre (6), which preform or fibre is unprotected from water attack and has a surface layer containing oxygen, and directly nitriding the surface layer which nitriding step comprises chemically changing part of the surface layer by substituting at least part of the oxygen therein with nitrogen to produce a silicon oxynitride based surface providing water attack protection.

2. A method of manufacturing silica optical fibre protected at least partially from water attack including the step of taking a silica preform (5) which is unprotected from water attack and has a surface layer containing oxygen, characterised by the step of directly nitriding the surface layer, which nitriding step comprises chemically changing part of the surface layer to silicon nitride or silicon oxynitride providing water attack protection by substituting at least part of the oxygen therein with nitrogen while drawing fibre (6) from the preform in a drawing furnace (1) in which a reducing and nitriding atmosphere is present.

3. A method as claimed in claim 2 characterised in that ammonia is injected into the drawing furnace and forms the reducing and nitriding atmosphere.

4. A method as claimed in claim 1 or 2 characterised in that the silica preform or silica fibre which is unprotected from water attack is provided with a compressive surface layer that contains oxygen and comprises said surface layer containing oxygen, and in that it is the compressive surface layer which undergoes the chemical changing.

5. A method as claimed in claim 4 characterised in that the compressive surface layer is provided on the silica preform or fibre by incorporating $TiCl_4$ and $SiCl_4$ in the flame of an oxyhydrogen torch (9) whereby to form a titania/silica soot (8), depositing the soot (8) on the preform (7) or fibre and sintering the soot.

**Patentansprüche**

1. Verfahren zur Herstellung einer aus Silika bestehenden optischen Faser, die zumindestens teilweise gegen Wassereinwirkung geschützt ist, gekennzeichnet durch die Schritte der Verwendung eines Silika-Rohlings (5) oder einer Silika-Faser (6), der oder die gegenüber Wassereinwirkung ungeschützt ist und eine Oberflächenschicht aufweist, die Sauerstoff enthält, und der direkten Nitrierung der Oberflächenschicht, wobei dieser Nitrierungsschritt die chemische Umwandlung eines Teils der Oberflächenschicht durch Ersetzen von zumindestens einem Teil des darin enthaltenen Sauerstoffs durch Stickstoff umfaßt, um eine Oberfläche auf der Grundlage eines Siliziumoxinitrids zu schaffen, die einen Schutz gegen Wassereinwirkung ergibt.

2. Verfahren zur Herstellung einer optischen Faser aus Silika, die zumindestens teilweise gegenüber Wassereinwirkung geschützt ist, wobei das Verfahren die Verwendung eines Silika-Rohlings (5) einschließt, der gegenüber einer Wassereinwirkung ungeschützt ist und eine Sauerstoff enthaltende Oberflächenschicht aufweist, gekennzeichnet durch den Schritt der direkten Nitrierung der Oberflächenschicht, wobei dieser Nitrierungsschritt die chemische Umwandlung eines Teils der Oberflächenschicht in Siliziumnitrid oder Siliziumoxinitrid einschließt und einen Schutz gegen Wassereinwirkung dadurch ergibt, daß zumindestens ein Teil des in der Oberflächenschicht enthaltenen Sauerstoffs durch Stickstoff ersetzt wird, während die Faser (6) von dem Rohling in einem Ziehofen (1) gezogen wird, in dem eine reduzierende und nitrierende Atmosphäre vorherrscht.

3. Verfahren nach Anspruch 2, dadurch gekennzeichnet, daß Ammoniak in den Ziehofen injiziert wird und die reduzierende und nitrierende Atmosphäre bildet.

4. Verfahren nach Anspruch 1 oder 2, dadurch gekennzeichnet, daß der Silika-Rohling oder die Silika-Faser, die gegenüber Wassereinwirkung ungeschützt ist, mit einer Kompressionsoberflächenschicht versehen wird, die Sauerstoff enthält und die die Sauerstoff enthaltende Oberflächenschicht bildet, und daß die Kompressionsoberflächenschicht diejenige ist, die der chemischen Umwandlung unterworfen wird.

5. Verfahren nach Anspruch 4, dadurch gekennzeichnet, daß die Kompressionsoberflächenschicht auf dem Silika-Rohling oder der Faser dadurch gebildet wird, daß $TiCl_4$ und $SiCl_4$ in die Flamme eines Wassersauerstoffbrenners (9) eingebracht wird, wodurch ein Titan-/Silika-Ruß (8) gebildet wird, daß der Ruß (8) auf dem Rohling (7) oder der Faser abgeschieden wird und daß der Ruß gesintert wird.

**Revendications**

1. Procédé de fabrication d'une fibre optique de silice protégée au moins partiellement contre l'attaque par l'eau, caractérisé par les étapes de prélèvement d'une préforme de silice (5) ou d'une fibre de silice (6), la préforme ou la fibre n'étant pas protégée contre l'attaque par l'eau et ayant une couche superficielle contenant de l'oxygène, et la nitruration directe de la couche superficielle, l'étape de nitruration comprenant la modification chimique d'une partie de la couche superficielle par remplacement d'une partie au moins de l'oxygène de cette couche par de l'azote afin qu'une surface à base d'un oxynitrure de silicium soit formée et donne une protection contre l'attaque par l'eau.

2. Procédé de fabrication d'une fibre optique de silice protégée au moins partiellement contre l'attaque par l'eau, comprenant l'étape de prélèvement d'une préforme (5) de silice qui n'est pas protégée contre l'attaque par l'eau et qui a une couche superficielle contenant de l'oxygène, caractérisé par l'étape de nitruration directe de la couche superficielle, l'étape de nitruration comprenant la modification chimique d'une partie de la couche superficielle en nitrure ou oxynitrure de silicium donnant une protection contre l'attaque par l'eau par remplacement d'une partie au moins de l'oxygène contenu par de l'azote, avec filage de la fibre (6) à partir de la préforme dans un four de filage (1) dans lequel une atmosphère réductrice et de nitruration est présente.

3. Procédé selon la revendication 2, caractérisé en ce que de l'ammoniac est injecté dans le four de filage et forme l'atmosphère réductrice et de nitruration.

4. Procédé selon la revendication 1 ou 2, caractérisé en ce que la préforme de silice ou la fibre de silice qui n'est pas protégée contre l'attaque par l'eau a une couche superficielle en compression qui contient de l'oxygène et comporte la couche superficielle contenant de l'oxygène, et en ce que c'est la couche de surface travaillant à la compression qui subit la modification chimique.

5. Procédé selon la revendication 4, caractérisé en ce que la couche superficielle travaillant à la compression est formée sur une fibre ou une préforme de silice par incorporation de $TiCl_4$ et $SiCl_4$ à la flamme d'un chalumeau oxhydrique (9), si bien qu'une suie (8) de silice-oxyde de titane se forme, que la suie (8) se dépose sur la préforme (7) ou la fibre, et que la suie est frittée.

Fig.1.

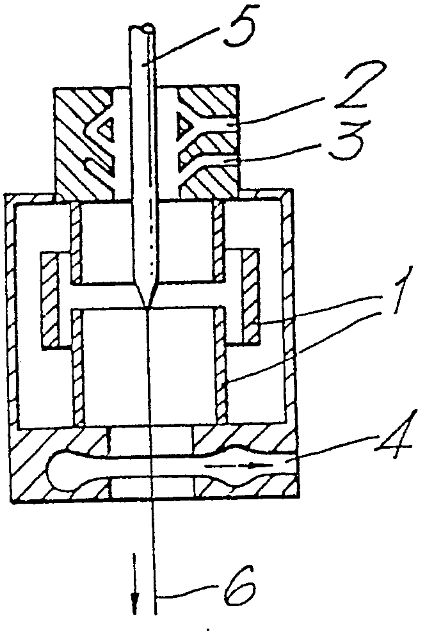


Fig.2.